Europäisches Patentamt

European Patent Office

Office européen des brevets

(11) Publication number: **0 126 474**
**B1**

# EUROPEAN PATENT SPECIFICATION

(45) Date of publication of patent specification: **28.09.88**

(51) Int. Cl.⁴: **A 22 C 11/02**

(21) Application number: **84105746.6**

(22) Date of filing: **19.05.84**

(54) **Stuffing apparatus and cusing article.**

(30) Priority: **20.05.83 US 495332**

(43) Date of publication of application:
**28.11.84 Bulletin 84/48**

(45) Publication of the grant of the patent:
**28.09.88 Bulletin 88/39**

(84) Designated Contracting States:
**AT BE CH DE FR GB IT LI LU NL SE**

(56) References cited:
**EP-A-0 004 013**
**BE-A- 895 031**
**FR-A-2 350 789**
**GB-A-2 075 459**

(73) Proprietor: **VISKASE CORPORATION**
**6855 West 65th Street**
**Chicago, Illinois 60638 (US)**

(72) Inventor: **Kupcikevicius, Vytautas**
**7130 So. Spaulding Avenue**
**Chicago, Illinois 60629 (US)**

(74) Representative: **Eggert, Hans-Gunther, Dr.**
**Räderscheidtstrasse 1**
**D-5000 Köln 41 (DE)**

Courier Press, Leamington Spa, England.

## Description

Technical Field

The present invention relates to stuffing of flowable product into casing lengths, such as cellulosic food casing, conventionally used to make sausages and other similar products. More particularly, the present invention relates to an improved stuffing apparatus for use especially in conjunction with controllably premoisturized, shirred casing.

Background Art

Typically, stuffing apparatus is commonly used in the food industry, for example, to automatically stuff food product, e.g., meat emulsion, into a casing length deshirred from a shirred casing supply mounted over a stuffing horn. After the product is stuffed, the casing is constricted and gathered around the end of the stuffed product by closing a pair of gathering plates. The stuffed product is then closed by applying a clip around the gathered end of the casing.

An important recent development in the food packing industry has been the use with food stuffing apparatus of a controllably premoisturized, shirred casing. This particular casing has several significant advantages. First of all, there is no need to soak the casing at the processing plant immediately prior to the stuffing operation. This of course saves considerable time, equipment and expense in the production of stuffed products.

Furthermore, since the moisture content of the casing is maintained at a controlled level, the casing tends to behave in a predictable fashion on the stuffing apparatus. Finally, since soaking is no longer a requirement, the casing can be shirred to higher pack ratios so that a greater length of casing can be shirred onto a stick of predetermined length. It will be readily apparent that this feature significantly reduces the apparatus downtime due to stick loading.

Casing which is controllably premoisturized to a commercially acceptable level, e.g., from about 15.5% to about 35%, and preferably to about 20%, of total casing weight, is much less pliable than a fully soaked casing. Unfortunately, this has given rise to certain problems in adapting existing stuffing equipment to handle the premoisturized casing. For instance, it has been found that stuffing pressures encountered with premoisturized casing may be significantly higher than those encountered when a fully soaked casing is employed to stuff the casing to the same diameter.

US-A-4,007,761 to Beckman describes a solution to this problem wherein a sizing disc or ring mounted inside the casing, stretches the casing circumferentially as the casing deshirrs from the casing supply. The sizing disc or ring stretches the casing toward or even beyond its recommended stuffed circumference, which thereby causes the casing to take a temporary set. With the casing stretched to about its recommended stuffed circumference, the emulsion entering the casing need only fill the casing without much, if any, additional stretching, resulting in a substantial reduction in stuffing pressure.

Unfortunately, the placement of a sizing disc or ring inside the casing to stretch the casing creates an additional problem in that the sizing disc or ring establishes a holdback force which, if not relieved, can prevent completion of the gathering and clipping operation without damage to the casing. This problem has been solved in the past by the provision of a tension sleeve. The tension sleeve is mounted over the stuffing horn and carries the sizing disc or ring at its outer end. The tension sleeve is connected at its other end to a reciprocating mechanism which cycles the tension sleeve first aft, then fore, to create a controlled length of slack casing which, in effect, substantially reduces the holdback force developed in the casing supply during gathering. The slack casing so provided is thus available to be drawn by the gathering plates around the end of the stuffed product.

Although the provision of a tension sleeve carrying a sizing disc or ring and reciprocating fore and aft on the stuffing horn has solved the problem of a casing holdback, the solution nevertheless has been a compromise since additional space must be taken from the shirred casing length on the stuffing horn to allow for the reciprocating motion of the tension sleeve. In other words, due to its reciprocating movement, the tension sleeve is shortened and this necessarily results in the loss of available shirred casing, approaching about 25% or at least enough in most cases to considerably dilute the pack ratio advantage offered by the highly compressed controllably premoisturized casing.

US-A-3,748,690 to Niedecker discloses a stuffing apparatus for stuffing sausage casings and the like wherein the stuffing horn is provided with a snubbing ring adjacent to its discharge end. The snubbing ring is arranged to reduce the casing holdback immediately after completion of the filling operation in order to accommodate flowable product that is displaced during the constriction and gathering operation.

DE-A-32 21 923 discloses an improved stuffing method and apparatus which is primarily adapted to the utilization of controllably premoisturized casing. In this development, a tension sleeve carrying a sizing disc or ring is provided along with a snubbing ring mounted adjacent to the discharge end of the stuffing horn. The snubbing ring serves infold the stretched casing as it passes from around the sizing disc or ring and also provides an emulsion seal as the infolded casing passes between the snubbing ring and stuffing horn. Again, the tension sleeve is adapted to reciprocate in order to provide slack in the casing while the snubbing ring is maintained in fixed or stationary position.

BE-A-895 031 discloses an apparatus for stuffing a flowable product into continuous length of controllably premoistured tubular casing. In a shirred casing supply mounted onto the stuffing horn of a stuffing apparatus a sizing member is disposed within an unshirred portion of the shirred casing supply and having an outer circumference which contacts the inner surface of the casing for stretching the casing to a predetermined dimension.

Cooperating with the sizing member is a sealing member surrounding the stuffing horn and contacting the outer surface of the stretched unshirred casing for folding the casing inwardly as it is drawn around and over the sizing member. The sealing member is controllably movable along the stuffing horn from a position adjacent to the sizing member to a position adjacent to the discharge end of the stuffing horn in order to change the holdback force of the casing from a maximum in the position of the sealing member adjacent to the sizing member and a minimum in the position of the sealing member adjacent to the discharge end of the stuffing horn. Since both, the sizing member and the sealing member, have relatively large cylindrical surface contact areas, the decrease of the casing contact surface area upon moving the sealing member is relatively small and the change of the holdback force will be low.

Disclosure of the Invention

The present invention contemplates a further improvement for stuffing a flowable product into continuous length of controllably premoistured tubular casing by reducing the surface contact area of the sizing member in relationship to the surface contact area of the engaging member, so that moving of the engaging member will influence the increase resp. decrease of the holdback force in a substantially manner. According to the present invention this will be achieved by an apparatus according to claim 1 and a casing article according to claim 17.

Useful further embodiments of the invention are described in claims 2 to 16 and 18 to 23.

The stuffing operation according to the present invention is carried out by mounting within the interior of the tubular casing a sizing member having an outer circumference which is larger than the casing in its initial unstuffed condition and then drawing the tubular casing over the sizing member in order to stretch the casing to about its recommended stuffed circumference. The outer circumference of the sizing member is provided with a casing contact surface area which is relatively small and which consequently reduces the force (i.e. holdback force) required to pull the casing over the sizing member. An engaging member or snubbing ring is placed around the exterior of the tubular casing in order to infold the stretched, deshirred casing after it has been drawn over the sizing member. The engaging member holds the casing against the surface of the stuffing horn to provide an emulsion seal. Further, the engaging member has an arcuate projection or extended lip which coacts with the sizing member to force the casing to follow a convoluted path. This, in turn, creates a high frictional holdback force on the casing. This holdback force, together with the holdback force created by the stretching action of the sizing member, combine to provide a total holdback force sufficient to control or regulate the internal stuffing pressure, thereby insuring that the casing will stuff out to the desired stuffed circumference.

During the stuffing operation, the engaging member is positioned in close proximity to the sizing member which is mounted inside the casing. However, said engaging member is caused to move longitudinally along the length of the stuffing horn just prior to or during the stuffed product gathering and clipping step, from its initial position adjacent to the sizing member to a point proximate to the discharge end of the stuffing horn. This substantially reduces the casing holdback force and thereby allows the casing to be drawn on demand from the shirred casing supply during the stuffed product gathering and clipping step.

In a preferred embodiment of the present invention, the internal sizing member is held fixed or stationary throughout the entire stuffing, gathering and clipping operation. This is made possible by the fact that the sizing member generally does not apply the major portion of the holdback force against the casing during the stretching operation. Accordingly, since the sizing member is fixed or stationary, essentially all of the space available to store the shirred casing on the stuffing horn can be readily utilized without sacrificing any space to accommodate reciprocating movement of a tension sleeve of similar device for supporting the sizing member.

In a preferred embodiment of apparatus according to the present invention, the interior sizing member is mounted to an end of a tubular core member which carries or supports the shirred casing supply. The tubular core member is mounted along with the casing supply over the stuffing horn and is held in stationary position thereon by suitable attachment means. Such means may include, for example, a bayonet mount arrangement for detachably fixing the inboard end of the tubular core member to a part of the apparatus.

The shirred casing supply used with the preferred embodiment may comprise a "cored high density" casing stick as described in DE-A-32 16 011 incorporated herein by reference. A cored high density casing article comprises a support tube or tubular core member with a shirred casing length mounted thereon and highly compacted to a high pack ratio (at least about 100) and a high packing efficiency (at least about 0.50). Such a configuration provides a casing article having improved structural stability and strength, and it supplies additional stuffing length as compared to conventional shirred sticks.

In its article aspects, the present invention comprehends a casing article comprising in combination, an elongated tubular core member having affixed thereto at one end a conically shaped sizing member, and a continuous length of a controllably premoistured tubular casing shirred and compacted over substantially the entire length of said tubular core member, said conically shaped sizing member being disposed within an unshirred portion of said casing and having an outer periphery of substantially fixed circumference which is larger than the interior circumference of said casing, such that said casing is stretched outwardly when the casing is drawn around and over said periphery, said periphery having a casing contact surface area which produces a minimal holdback force on the casing so that the casing can be drawn easily around and over the periphery of the sizing member when no other holdback forces are applied thereto.

The internal sizing member is preferably conical in shape as opposed to a cylindrical disc and is, preferably, made integral with the outer end of the tubular core member. This sizing member can be conveniently made by molding the sizing member in one piece with the tubular core member. Since the sizing member must stretch the casing, it must be made of a substantially unresilient material such as metal or, preferably, a rigid plastic such as high density polyethylene.

The engaging member preferably includes an annular projection which surrounds the inner circumference thereof and can coact with the internal sizing member to create a convoluted casing path. Preferably, the annular projection on the engaging member is adapted to enter the open annular space defined between the conical sizing member and the stuffing horn. This arrangement is utilized to effectively increase the convolution of the casing passage and thereby produces a significant portion of the holdback force to control or regulate the internal stuffing pressure.

Description of the Drawing

The present invention will be described in greater detail hereinafter with particular reference to the accompanying drawing in which:

Figure 1 is an elevational sectional view showing apparatus according to the present invention during the stuffing operation;

Figure 2 is a similar view showing the same apparatus during the constriction and gathering operation;

Figure 3 is an exploded view showing an assembly for mounting and adjusting the longitudinal position of the casing article on the stuffing apparatus according to a preferred embodiment of the present invention.

Description of the Preferred Embodiments

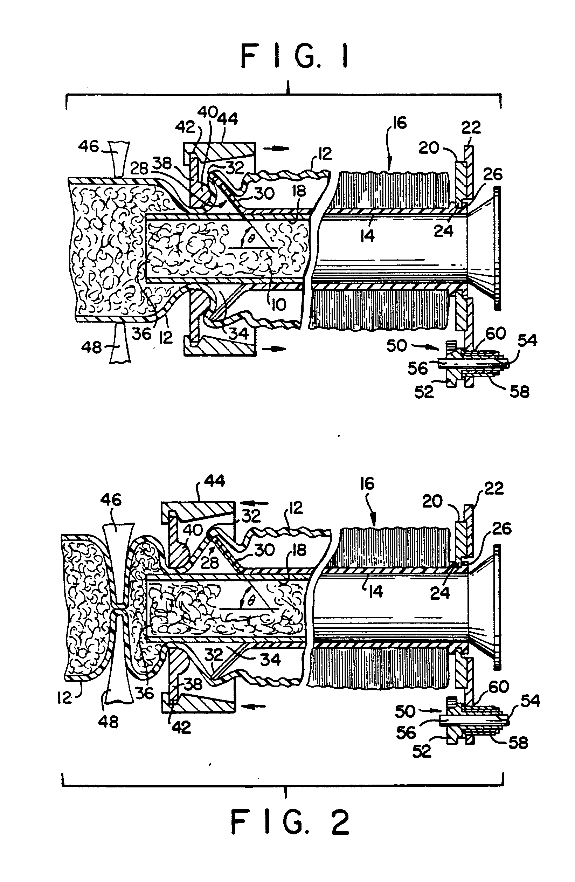

Referring now more particularly to the drawings, there is shown in Figures 1 and 2 an apparatus according to the present invention for stuffing a flowable product such as a meat emulsion 10 into continuous lengths of tubular cellulosic casing 12. Preferably, the casing 12 is a controllably premoisturized casing which is shirred and compacted tightly onto an elongated plastic tube or core 14 to form a complete casing article depicted generally by the reference numeral 16. The casing article 16 is loaded onto the stuffing apparatus by placing the plastic tube or core 14 over the elongated stuffing horn 18. Only those parts of the stuffing apparatus are shown that are considered essential to an understanding of the present invention.

The casing article 16 is detachably mounted onto the apparatus by means of a pair of mounting plates 20, 22. These mounting plates each have coinciding openings through which passes the aft end of the stuffing horn 18. The outermost plate 22 is fixed to a part of the apparatus, not shown, while the other innermost plate 20 is removably secured thereto as by set screws, also not shown. The innermost plate 20 carries around the periphery of its opening an interrupted flange element 24 which forms part of a conventional bayonet mount arrangement. The inboard end of the plastic tube or core 14 is formed with similar spaced interrupted flange elements as at 26 which engage the flange element 24 and detachably lock the tube in place upon rotation.

A conically shaped sizing member 28 is disposed within the interior of the tubular casing 12. The sizing member 28 is affixed to the fore end of the elongated plastic tube or core 14 and preferably, though not necessarily, is made an integral part thereof. In the embodiment of the stuffing apparatus shown, the sizing member 28 is molded in one piece with the plastic tube or core 14. Alternatively, the sizing member 28 can be made as a separate piece and then suitably secured onto the end of the plastic tube or core 14. The sizing member 28 can also be detachably secured by suitable means to the stuffing horn if desired.

The conically shaped sizing member 28 in its preferred form includes an outwardly flared wall 30 terminating at its outer edge in a narrow, rounded peripheral rim 32. The wall 30 is disposed at an angle $\theta$ with respect to the longitudinal axis of the plastic tube or core 14 defining an open annular space 34 between the wall 30 and the outer surface of the stuffing horn 18.

The elongated plastic tube or core 14 is preferably made as long as possible in order to incorporate the maximum length of shirred tubular casing within the casing article 16. However, the plastic tube or core 14 is shorter than the overall length of the stuffing horn 18 leaving a part of the latter exposed in an area adjacent to the discharge end 36.

A snubbing ring or engaging member 38 is disposed concentrically around the exposed area on the stuffing horn 18. The engaging member 38 contacts the exterior surface of the stretched, unshirred casing 12 and infolds the casing as it is drawn from around the outer rim 32 of the sizing member 28.

The engaging member 38 is formed around its inner periphery with an annular, arcuate shaped projection 40. The annular projection 40 contacts the exterior surface of the stretched, unshirred casing 12 and, in concert with the sizing member 28, produces a holdback force on the casing. The inner periphery of the engaging member 38 also holds the casing 12 snugly around the discharge end 36 of the stuffing horn 18. This prevents back flow of the meat emulsion extruded from the stuffing horn 18, that is, the engaging member prevents the meat emulsion from entering the casing 12 at a point inboard of the engaging member 38.

The outer periphery of the engaging member 38 is secured inside an annular groove 42 formed on the inner surface of a circular carriage 44. This carriage 44 is connected to a suitable drive mechanism, not shown, which is adapted to move the carriage 44 and engaging member 38 longitudinally along the exposed area on the stuffing horn 18 in both the fore and aft direction as depicted by the arrows. The mechanism for driving the carriage 44 may be, for example, a pair of pneumatic cylinders operating in tandem or any similar device.

As the meat emulsion 10 extrudes from the discharge end 36 of the stuffing horn 18 under pressure from an emulsion pump, not shown, the meat emulsion fills the tubular casing 12 outwardly to the desired stuffing circumference. The casing 12 is continuously deshirred from the casing article 16 and is drawn over the peripheral rim 32 of the sizing member 28. The rim 32 stretches the casing outwardly to about its recommended stuff diameter and thereby reduces the internal pressure required to complete the stuffing operation. The stretched casing 12 is then infolded and continuously drawn around the arcuate annular projection or extended lip 40 of engaging member 38. The ring 38 contacts the casing and holds it snugly against the surface of the stuffing horn 18.

During the stuffing operation, the engaging member 38 is positioned adjacent to the conically shaped sizing member 28 as illustrated in the view of Figure 1. In this position of the engaging member 38, the extended lip 40 is placed inside the annular space 34 between the flared wall 30 and the stuffing horn 18. It will be seen by this arrangement that the infolded section of the casing 12 actually reverses direction following a convoluted path first inwardly and rearwardly as it passes through the space 34 and then in the forward direction again as the casing is drawn around the extended lip 40. This convoluted path that the casing 10 is forced to follow creates the additional holdback force which is necessary to enable the casing to be fully stuffed to the desired stuffed diameter.

As soon as the casing 12 is filled to a predetermined length with meat emulsion 10, emulsion flow is shut off and the engaging member 38 is moved along the stuffing horn 18 by the carriage 44 and its associated drive mechanism to a position close to the horn discharge end 36 as shown in the view of Figure 2. This substantially reduces the total holdback force of the engaging member on the casing, while leaving undisturbed that portion of the total holdback force contributed by the stretching action of the sizing member.

A pair of constriction plates 46, 48, are located just ahead of the discharge end 36 of the stuffing horn 18. These plates simultaneously close together to constrict the filled casing 12 as shown in the view of Figure 2. The extra casing required to form the rear or trailing end of the just-stuffed product length and the front end of the succeeding "next-to-be-stuffed" product length is pulled from the shirred casing supply, and over the sizing member, by the action of the constriction plates. This ability to draw casing from the shirred casing supply, as needed, is brought about by controllably eliminating a large portion of the total holdback force required for stuffing, by moving the engaging member and thereby reducing its holdback contribution through minimizing the casing contact area on the arcuate annular projection 40, as shown in Figure 2.

A pair of clips (not shown) seal the rear end of the just-stuffed product length and the front end of the next product length, and a severing means (not shown) separates the casing between the clips. The engaging member 38 is withdrawn from horn discharge end 36 and positioned again adjacent to the conically shaped sizing member 28. Emulsion flow is reactivated, and stuffing of the next product length commences.

While in the stuffing position shown in Figure 1, the arcuate annular projection 40 of the engaging member 38 coacts with the sizing member 28 to force the tubular casing 12 to follow a convoluted path as it deshirrs from the casing supply. This creates a high frictional holdback force on the casing which, when coupled with the holdback force created by the stretching action of sizing member 28, provides a total holdback force sufficient to control or regulate the internal stuffing pressure, thereby insuring that the casing will stuff out to the desired stuffed diameter or stuffed circumference.

The rim 32 formed by the outer periphery of the sizing member 28 has a relatively small surface area which contacts the interior of the casing 12. While stretching the casing 12 to about its recommended stuffing circumference, said sizing member, therefore, produces a minimal holdback force on the casing. When in the constriction and gathering position shown in Figure 2, the major portion of the total holdback force which is acting on the casing becomes that portion which is due to this stretching contact of the sizing member. This allows the constricting and gathering action to easily draw casing from the shirred casing supply over the rim 32 as required. There is, therefore, no necessity to move or reciprocate the casing supply 16 to create slack during the constriction, gathering and clipping operation. It is only necessary to move the engaging member 38 approximately 3/8-inch away from the sizing member 28 to eliminate a substantial portion of the total holdback force on the casing.

An important advantage of the above described arrangement is that it is no longer necessary to provide space for reciprocating the plastic tube or core 14. Consequently, the core can be longer and, thereby, a maximum length of shirred casing can now be applied to the plastic tube or core 14 during assembly of the casing article 14. This advantage is of significant value in the case where a controllably premoisturized, shirred casing is employed.

Although the plastic tube or core 14 is held stationary on the stuffing horn 18 throughout operation of the apparatus, it may be convenient if not necessary, to meet special user requirements, to adjust the position of the tube or core 14 and in turn the location of the conically shaped sizing member 28 with respect to the engaging member 38. This is readily accomplished in accordance with the present invention by the provision of a mounting plate adjustment mechanism 50. This mechanism may consist, for example, of a rotatable knob 52 having a tubular extension 54 mounted on a stationary shaft 56. The tubular extension 54 is threadably engaged inside a tubular sleeve 58 which in turn is fixedly secured in an opening 60 formed within the mounting plate 22. It will be seen then that by simply rotating the knob 52 either clockwise or counterclockwise, the plate 22 and, in turn, the tube or core 14 can be moved, in small increments, longitudinally in either direction along the length of the stuffing horn 18.

This movement of the tube or core 14 causes the conically shaped sizing member 28 to relocate either closer to or farther from the engaging member 38 and its projection 40, thereby controlling the amount of total holdback to be developed in the casing supply. By properly adjusting the distance between the sizing member 28 and the engaging member 38, provision is thereby made to assure that an optimum portion of the casing contact surface area on the arcuate annular projection 40 will be in contact with the infolded casing during stuffing in order to provide that the total holdback force will produce the desired stuffed casing circumference or diameter. The mechanism whereby the level of holdback contributed by the engaging member 38 is controlled, involves the amount of casing 12 which is wrapped around arcuate projection 40 as the casing moves over the sizing member 28 and past the engaging member. The closer the engaging member 38 is set to the sizing member 28, the greater the amount of casing wrap and, therefore, the higher the holdback force. Similarly, when the distance is greater, the casing wrap is less, and with a lesser casing wrap a lesser holdback force is produced.

In the practice of the present invention, the angle θ defined between the flared wall 30 and the longitudinal axis of the plastic tube or core 14 may be any angle in a range of between about 30 and 75 degrees, for example. Preferably, the angle ⊖ is about 45°. This preferred angle provides a space 34 for creating casing holdback.

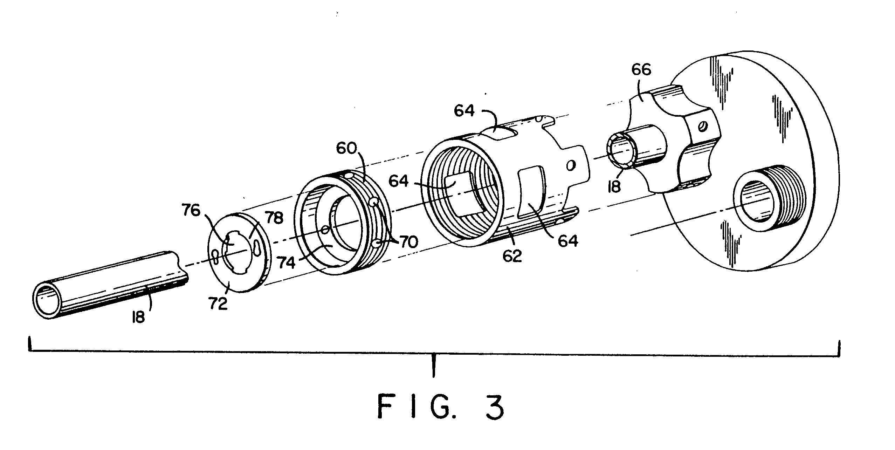

An alternate and preferred assembly for detachably mounting the casing article on the stuffing apparatus and adjusting the longitudinal position of tube or core 14 is shown in Figure 3.

An internally threaded outer ring 62, provided with openings 64 about its periphery, is mounted concentric to the stuffing horn 18 and bolted to the horn attachment nut 66 of the stuffing apparatus. An externally threaded adjusting ring 60 is concentrically mounted around the stuffing horn and threadably engaged within outer ring 62. A number of adjusting holes 70 are radially bored around the periphery of the adjusting ring so that they are accessible through the openings 64 of outer ring 62 for the insertion of a rod (not shown) into a hole 70 for adjusting the position of ring 60 within ring 62 by rotating ring 60. An adapter ring 72 is, in turn, mounted concentric to the stuffing horn and bolted to the face 74 of adjusting ring 60. The adapter ring carries around the periphery of its opening 76 an interrupted flange element 78 which forms part of a conventional bayonet mount arrangement. Only the adapter ring 72 need be changed to accommodate different tubular core inboard sizes. As earlier described, the inboard end of the plastic tube or core 14 of the casing article is formed with a similar spaced interrupted flange element which engages the flange element 78 and detachably locks the tube in place upon rotation. It will be seen that by simply rotating the externally threaded adjusting ring 60, within the internally threaded outer ring 62, the adapter ring 72 and, in turn, the tube or core 14 of the casing article can be moved longitudinally in either direction along the stuffing horn 18, establishing any desired relationship between the sizing member 28 and the engaging member 38.

While a preferred embodiment has been described herein, it should be appreciated that other arrangements of a movable external engaging member and a stationary internal sizing member would fall within the scope of the claimed invention. For example, the internal sizing member could have a convoluted outer periphery which would impart little or no prestretching or holdback to the casing until an engaging member, provided with a plurality of fingers or protuberances, pressed and stretched the casing into the recessed portions of the convoluted sizing member.

Similarly, the internal sizing member can have a shape (e.g. ellipsoidal, hemispherical, etc.) other than a conical shape, as long as an annular space is provided between said sizing member and the stuffing horn to allow coaction with the engaging member, and provided that the contact area of the sizing member with the casing is roughly equivalent to that provided by the rim of a conical sizing member.

**Claims**

1. Apparatus for stuffing a flowable product into continuous lengths of tubular casing, including an elongated stuffing horn (18) having a discharge end (36); a shirred casing supply mounted on the stuffing horn and having an unshirred portion, said casing supply comprising controllably premoistured casing (12); a casing sizing means (28) disposed within said unshirred portion, said sizing means defines a fixed outer circumference larger in circumference that the inner circumference of the casing in said casing supply for maintaining a continous uninterrupted contact along a circumferential path with the inner surface of said casing and for stretching the casing to a predetermined dimension, said contact providing a holdback force on the casing of a first minimum magnitude which allows the casing to be easily drawn around and over said sizing means; a casing engaging means (38) surrounding the stuffing horn (18) at a position forward of said sizing means for contacting the outer surface of the stretched casing and folding the casing inwardly as the casing is drawn around and over the sizing means, said engaging means having a surface which contacts the casing, thereby producing a holdback force on the casing of a second maximum magnitude during the stuffing operation when said engaging means is positioned adjacent to said sizing means and reducing the holdback force on the casing to substantially said first minimum magnitude when said casing engaging means is positioned adjacent to the discharge end of the stuffing horn to enable the stretched casing to be easily drawn over the sizing means; characterized in that said casing sizing means (28) includes a substantially unresilient wall (30) which flares outwardly towards the stuffing horn discharge end (36) and which terminates in a relatively narrow rim (32) that defines the fixed outer circumference larger than the inner circumference of the casing (12) in said casing supply, and said casing engaging means (38) has a surface which contacts the casing over an optimum portion thereof when said engaging means is positioned adjacent to said sizing means and which contacts the casing over a minimum portion thereof when said casing engaging means is positioned adjacent to the discharge end of the stuffing horn, and further characterized by means for controllably moving said engaging means along the stuffing horn from a position adjacent said sizing means to a position adjacent the stuffing horn discharge end; and means for holding said sizing means stationary on the stuffing horn.

2. Apparatus according to claim 1, characterized in that said casing engaging means (38) is of annular shape having an inner periphery of a size sufficient to hold the casing (12) around the exterior surface of the stuffing horn (18).

3. Apparatus according to claim 1 or 2, characterized in that said wall (30) provides an annular opening between said sizing means (28) and the stuffing horn (18), and said casing engaging means (38) includes an arcuate projection (40) adapted to enter the annular opening when said casing engaging means is positioned adjacent said sizing means.

4. Apparatus according to any of claims 1 to 3, characterized in that said means for holding said sizing means (28) stationary comprises a tubular core member (14) extending through and supporting said shirred casing supply over its length, and the tubular core member having said sizing means (28) affixed to a first end thereof with said wall (30) flared outwardly from said first end.

5. Apparatus according to claim 4, characterized in that at least one mounting plate is located adjacent to the inboard end of the tubular core member (14) for holding the same in stationary position on the stuffing horn (18).

6. Apparatus according to claim 5, characterized by means for adjusting the stationary position of the tubular core member (14).

7. Apparatus according to claim 6, characterized in that the adjustment means comprises an adjustable screw attached to the mounting plate.

8. Apparatus according to any of claims 5 to 7, characterized by a second mounting plate removably attached to said first mentioned mounting plate for attaching different size tubular core members (14).

9. Apparatus according to claim 8, characterized in that the tubular core member (14) is attached to the second mounting plate by means of a bayonet mount arrangement.

10. Apparatus according to any of claims 1 to 9, characterized by means for gathering the tubular casing after a predetermined amount of the flowable product has been discharged from the stuffing horn (18).

11. Apparatus according to any of claims 4 to 10, characterized by an internally threaded outer ring located adjacent to the inboard end of the tubular core member (14) for holding the same in stationary position on the stuffing horn (18).

12. Apparatus according to claim 11, characterized by means for adjusting the stationary position of the tubular core member (14).

13. Apparatus according to claim 12, characterized in that the adjustment means comprises an externally threaded adjusting ring threadably engaged with the outer ring and detachably attached to the tubular core member (14) by means coacting with the inboard end of the core member.

14. Apparatus according to claim 13, characterized in that the means coacting with the inboard end of the tubular core member (14) comprises a bayonet mount engagement means.

15. Apparatus according to any of claims 1 to 14, characterized in that the wall (30) of the sizing member (28) is conically shaped.

16. Apparatus according to any of claims 1 to 15, characterized in that the relatively narrow rim (32) is rounded.

17. A casing article having an elongated tubular core member (14), a sizing member (28) affixed thereto at one end, and a continuous length of a controllably premoisturized tubular casing (12) shirred and compacted over substantially the entire length of said tubular core member, said sizing member being disposed within an unshirred portion of said casing and having an outer periphery of substantially fixed circumference which is larger than the interior circumference of said casing, characterized in that said sizing member (28) comprising a substantially unresilient wall (30) which flares outwardly from said one end and therminates in a relatively narrow rim (32) that defines said outer periphery of substantially fixed circumference and said rim maintaining substantially uninterrupted contact along a circumferential path with the interior circumference of said casing (12), such that said casing is stretched outwardly when around and over said rim, said contact providing a casing contact surface area which produces a minimal holdback force on said casing so that said casing can be drawn easily around and over said rim when no other holdback forces are applied/ thereto/ to said casing.

18. The casing article according to claim 17, characterized in that said sizing means (28) is integral with the tubular core member (14).

19. The casing article according to claim 17 or 18, characterized in that said tubular core member (14) has means on its second end for mounting the casing article in fixed position on a stuffing horn (14).

20. The casing article according to any of claims 17 to 19, characterized in that said tubular casing (12) is a cellulosic casing.

21. The casing article according to any of claims 17 to 20, characterized in that said tubular casing (12) has a moisture content in the range of from about 15.5 % to about 35 % of total casing weight.

22. The casing article according to any of claims 17 to 21, characterized in that said sizing member (28) is conically shaped.

23. The casing article according to any of claims 17 to 22, characterized in that the relatively narrow rim (32) is rounded.

**Patentansprüche**

1. Vorrichtung zum Stopfen eines fließfähigen produktes in kontinuierliche Längen schlauchförmiger Hülle, mit einem verlängerten Stopfhorn (18), das ein Auslaßende (36) aufweist, und mit einem auf dem Stopfhorn angeordneten und einen ungerafften Teil aufweisenden Vorrat an geraffter und steuerbar vorgefeuchteter Hülle (12), und mit einer innerhalb des ungerafften Teils der Hülle angeordneten Kalibriereinrichtung (28), die einen konstanten äußeren Umfang aufweist, der zum Aufrechterhalten eines konstanten ununterbrochenen Kontaktes entlang einer Umfangslinie mit der inneren Oberfläche der Hülle und zum Aufweiten der Hülle auf eine vorherbestimmte Abmessung größer ist als der innere Umfang der Hülle in dem Vorrat an geraffter Hülle, wobei der Kontakt auf die Hülle eine Rückhaltekraft einer ersten minimalen Größe ausübt, die ein leichtes Abziehen der Hülle um und über die Kalibriereinrichtung ermöglicht, sowie mit einer das Stopfhorn in einer Position vor der Kalibriereinrichtung das Stopfhorn (18) umgebenden Einschnüreinrichtung (38) zum Erfassen und Einwärtsfalten der gedehnten Hülle, wenn diese um und über die Kalibriereinrichtung gezogen wird, wobei die Einschnüreinrichtung eine Oberfläche aufweist, die mit der Hülle in Kontakt ist und dadurch während des Stopfvorgangs auf diese eine Rückhaltekraft von einer zweiten maximalen Größe ausübt, wenn die Einschnüreinrichtung nahe der Kalibriereinrichtung positioniert ist und verringernd die Rückhaltekraft auf die Hülle auf im wesentlichen die erste minimale Größe, wenn die Einschnüreinrichtung nahe dem Auslaßende des Stopfhorn positioniert ist, um die aufgeweitete Hülle leicht über die Kalibriereinrichtung ziehen zu können, dadurch gekennzeichnet, daß die Kalibriereinrichtung (28) eine im wesentlichen unnachgiebige Wand (30) aufweist, die sich gegen das Auslaßende (36) des Stopfhorns zu nach auswärts erstreckt und in einem verhältnismäßig schmalen Rand (32) endet, welcher den konstanten äußeren Umfang bestimmt, der größer ist als der innere Umfang der Hülle (12) im Hüllenvorrat, und daß die Einschnüreinrichtung (38) eine Oberfläche aufweist, welche mit einem großen Teil davon mit der Hülle in Kontakt ist, wenn die Einschnüreinrichtung nahe der Kalibriereinrichtung positioniert ist und welche mit einem kleinen Teil davon mit der Hülle in Kontakt ist, wenn die Einschnüreinrichtung nahe dem Auslaßende des Stopfhorns positioniert ist, und ferner gekennzeichnet durch eine Einrichtung zum steuerbaren Bewegen der Einschnüreinrichtung entlang des Stopfhorns von einer Position nahe der Kalibriereinrichtung in eine Position nahe dem Auslaßende des Stopfhorns sowie durch eine Einrichtung zum stationären Festhalten der Kalibriereinrichtung auf dem Stopfhorn.

2. Vorrichtung nach Anspruch 1, dadurch gekennzeichnet, daß die Kalibriereinrichtung von ringförmiger Gestalt ist und einen Innenumfang von einer Größe aufweist, die ausreicht, die Hülle (12) um die äußere Oberfläche des Stopfhorns (18) herum zu halten.

3. Vorrichtung nach Anspruch 1 oder 2, dadurch gekennzeichnet, daß die Wand (30) eine ringförmige Öffnung zwischen der Kalibriereinrichtung (28) und dem Stopfhorn (18) bildet und die Einschnüreinrichtung (38) einen gewölbten Vorsprung (40) aufweist, der so ausgebildet ist, daß er in die ringförmige Öffnung hineinragt, wenn die Einschnüreinrichtung nahe der Kalibriereinrichtung positioniert ist.

4. Vorrichtung nach einem der Ansprüche 1 bis 3, dadurch gekennzeichnet, daß die Einrichtung zum stationären Festhalten der Kalibriereinrichtung (28) ein rohrförmiges sich durch den Hüllenvorrat erstreckendes und diesen über seine Länge tragendes Kernelement (14) aufweist und auf dessen einem Ende die Kalibriereinrichtung (28) mit sich von diesem Ende auswärts erstreckender Wand (30) befestigt ist.

5. Vorrichtung nach Anspruch 4, dadurch gekennzeichnet, daß wenigstens eine Befestigungsplatte am einwärtigen Ende des rohrförmigen Kernelementes (14) zu dessen stationärem Festhalten auf dem Stopfhorn (18) angeordnet ist.

6. Vorrichtung nach Anspruch 5, gekennzeichnet durch eine Einrichtung zum Einstellen der stationären Position des rohrförmigen Kernelementes (14).

7. Vorrichtung nach Anspruch 6, dadurch gekennzeichnet, daß die Einstelleinrichtung eine an der Befestigungsplatte angebrachte verstellbare Schraube aufweist.

8. Vorrichtung nach einen der Ansprüche 5 bis 7, gekennzeichnet durch eine mit der wenigstens einen Befestigungsplatte abnehmbar verbundene zweite Befestigungsplatte zum Anbringen von rohrförmigen Kernelementen (14) mit unterschiedlicher Größe.

9. Vorrichtung nach Anspruch 8, dadurch gekennzeichnet, daß das rohrförmige Kernelement (14) mittels eines Bajonettverschlusses mit der zweiten Befestigungsplatte verbunden ist.

10. Vorrichtung nach einem der Ansprüche 1 bis 9, gekennzeichnet durch eine Einrichtung zum Zusammenraffen der schlauchförmigen Hülle nach Austritt einer vorbestimmten Menge des fließfähigen Produktes aus dem Auslaßende des Stopfhorns (18).

11. Vorrichtung nach einem der Ansprüche 4 bis 10, gekennzeichnet durch einen am einwärtigen Ende des rohrförmigen Kernelementes (14) angeordneten innenseitig mit einem Gewinde versehenen äußeren Ring zum Festhalten des Kernelementes (14) auf dem Stopfhorn (18) in einer stationären Position.

12. Vorrichtung nach Anspruch 11, gekennzeichnet durch eine Einrichtung zum Verstellen der stationären Position des rohrförmigen Kernelementes (14).

13. Vorrichtung nach Anspruch 12, dadurch gekennzeichnet, daß die Verstelleinrichtung einen außenseitig mit einem Gewinde versehenen Verstellring aufweist, der mit dem äußeren Ring verschraubt und mit dem rohrförmigen Kernelement (14) mittels einer mit dem einwärtigen Ende des Kernelementes zusammenwirkenden Einrichtung lösbar verbunden ist.

14. Vorrichtung nach Anspruch 13, dadurch gekennzeichnet, daß die mit dem einwertigen Ende des rohrförmigen Kernelementes (14) zusammenwirkende Einrichtung eine Bajonettverschlußeinrichtung aufweist.

15. Vorrichtung nach einem der Ansprüche 1 bis 14, dadurch gekennzeichnet, daß die Wand (30) der Kalibriereinrichtung (28) konisch geformt ist.

16. Vorrichtung nach einem der Ansprüche 1 bis 15, dadurch gekennzeichnet, daß der verhältnismäßig schmale Rand (32) abgerundet ist.

17. Hüllenartikel mit einem verlängerten rohrförmigen Kernelement (14), einem damit am einen Ende befestigten Kalibrierteil (28) und einer kontinuierlichen Länge von gesteuert vorgefeuchteter schlauchförmiger Hülle (12) gerafft und verdichtet über im wesentlichen die gesamte Länge des rohrförmigen Kernelementes, wobei das Kalibrierteil innerhalb eines entrafften Teils der Hülle angeordnet ist und eine Außenfläche von im wesentlichen bestimmtem Umfang aufweist, der größer ist als der Innenumfang der Hülle, dadurch gekennzeichnet, daß das Kalibrierteil (28) eine im wesentlichen unelastische Wand (30) aufweist, die sich von dem einen Ende aus nach außen erstreckt und in einem verhältnismäßig schmalen Rand (32) endet, der die Außenfläche von im wesentlichen bestimmtem Umfang bildet und wobei der Rand im wesentlichen ununterbrochenen Kontakt entlang einer Umfangslinie mit dem inneren Umfang der Hülle (12) aufrechterhält, so daß die Hülle nach außen gedehnt wird, wenn sie rundherum über den Rand gezogen wird, wobei der Kontakt einen Hüllenkontaktoberflächenbereich liefert, der eine minimale Rückhaltekraft auf die Hülle erzeugt, so daß die Hülle leicht um den Rand herum und über diesen gezogen werden kann, wenn keine anderen Kräfte auf die Hülle ausgeübt werden.

18. Hüllenartikel nach Anspruch 17, dadurch gekennzeichnet, daß die Kalibriereinrichtung (28) .mit dem rohrförmigen Kernglied (14) integriert ist.

19. Hüllenartikel nach Anspruch 17 oder 18, dadurch gekennzeichnet, daß das rohrförmige Kernglied (14) an seinem zweiten Ende eine Einrichtung zum Befestigen des Hüllenartikels in bestimmter position auf einem Stopfhorn (18) aufweist.

20. Hüllenartikel nach einem der Ansprüche 17 bis 19, dadurch gekennzeichnet, daß die schlauchförmige Hülle (12) eine Cellulosehülle ist.

21. Hüllenartikel nach einem der Ansprüche 17 bis 20, dadurch gekennzeichnet, daß die schlauchförmige Hülle (12) einen Feuchtigkeitsgehalt im Bereich von etwa 15,5, % bis etwa 35 % des Hüllengesamtgewichts aufweist.

22. Hüllenartikel nach einem der Ansprüche 17 bis 21, dadurch gekennzeichnet, daß das Kalibrierglied (28) konisch geformt ist.

23. Hüllenartikel nach einem der Ansprüche 17 bis 22, dadurch gekennzeichnet, daß der verhältnismäßig schmale Rand (32) abgerundet ist.

## Revendications

1. Appareil pour le poussage d'un produit pouvant couler dans des longueurs continues d'enveloppe tubulaire, comprenant un cornet allongé (18) de poussage ayant une extrémité de décharge (36); une réserve d'enveloppes plissées montée sur le cornet de poussage et ayant un tronçon non plissé, ladite réserve d'enveloppes comprenant une enveloppe (12) à préhumidification contrôlable; un moyen (28) de calibrage d'enveloppe disposé à l'intérieur dudit tronçon non plissé, ledit moyen de calibrage définissant une circonférence extérieure fixe plus grande que la circonférence intérieure de l'enveloppe dans ladite réserve d'enveloppes afin de maintenir un contact continu et ininterrompu le long d'un trajet circonférentiel avec la surface inté rieure de ladite enveloppe et d'étirer l'enveloppe à une dimension prédéterminée, ledit contact produisant une force de retenue sur l'enveloppe, d'une première amplitude minimale qui permet à l'enveloppe d'être aisément tirée autour de et par-dessus ledit moyen de calibrage; un moyen (38) de prise d'enveloppe entourant le cornet (18) de poussage dans une position située en avant dudit moyen de calibrage afin d'entrer en contact avec la surface extérieure de l'enveloppe étirée et de plier l'enveloppe vers l'intérieur pendant que l'enveloppe est tirée autour de et par-dessus le moyen de calibrage, ledit moyen de prise ayant une surface qui est en contact avec l'enveloppe, afin de produire sur l'enveloppe une force de retenue d'une seconde amplitude maximale pendant l'opération de poussage lorsque ledit moyen de prise est placé à proximité immédiate dudit moyen de calibrage et de réduire la force de retenue sur l'enveloppe à sensiblement ladite première amplitude minimale lorsque ledit moyen de prise de l'enveloppe est placé à proximité immédiate de l'extrémité de décharge du cornet de poussage pour permettre à l'enveloppe plissée d'être aisément tirée pardessus le moyen de calibrage; caracté risé en ce que ledit moyen (28) de calibrage d'enveloppe comprend une paroi sensiblement inélastique (30) qui s'évase vers l'extérieur en direction de l'extrémité (36) de décharge du cornet de poussage et qui aboutit dans un rebord relativement étroit (32) qui définit la circonférence extérieure fixe plus grande que la circonférence intérieure de l'enveloppe (12) dans ladite réserve d'enveloppes, et ledit moyen (38) de prise d'enveloppe présente une surface qui est en contact avec l'enveloppe sur une partie optimale de celle-ci lorsque ledit moyen de prise est placé à proximité immédiate dudit moyen de calibrage et qui est en contact avec l'enveloppe sur une partie minimale de celle-ci lorsque ledit moyen de prise d'enveloppe est placé à proximité immédiate de l'extrémité de décharge du cornet de poussage, et caractérisé en outre par des moyens destinés à déplacer de façon réglable ledit moyen de prise le long du cornet de poussage, d'une position adjacente audit moyen de calibrage jusqu'a une position adjacente à l'extrémité de décharge du cornet de poussage; et des moyens destinés à maintenir ledit moyen de calibrage immobile su le cornet de poussage.

2. Appareil selon la revendication 1, caractérisé en ce que ledit moyen (38) de prise d'enveloppe est de forme annulaire ayant une périphérie intérieure d'une dimension suffisante pour maintenir l'enveloppe (12) autour de la surface extérieure du cornet de poussage (18).

3. Appareil selon la revendication 1 ou 2, caractérisé en ce que ladite paroi (30) présente une ouverture annulaire entre ledit moyen de calibrage (28) et le cornet de poussage, et ledit moyen (38) de prise d'enveloppe comporte une saillie arrondie (40) conçue pour pénétrer dans l'ouverture annulaire lorsque ledit moyen de prise d'enveloppe est placé à proximité immédiate dudit moyen de calibrage.

4. Appareil selon l'une quelconque des revendications 1 à 3, caractérisé en ce que lesdits moyens destinés à maintenir ledit moyen (28) de calibrage immobile comprennent un élément de noyau tubulaire (14) s'étendant à travers ladite réserve d'enveloppes plissées et la supportant sur sa longueur, et ledit moyen (28) de calibrage étant fixé à une première extrémité de l'élément de noyau tubulaire de manière que ladite paroi (30) s'évase vers l'extérieur à partir de ladite première extrémité.

5. Appareil selon la revendication 4, caractérisé en ce qu'au moins une plaque de montage est placée à proximité immédiate de l'extrémité intérieure de l'élément de noyau tubulaire (14) pour maintenir celui-ci en position fixe sur le cornet (18) de poussage.

6. Appareil selon la revendication 5, caractérisé par des moyens destinés à régler la position fixe de l'élément de noyau tubulaire (14).

7. Appareil selon la revendication 6, caractérisé en ce que les moyens de réglage comprennent une vis réglable fixée à la plaque de montage.

8. Appareil selon l'une quelconque des revendications 5 à 7, caractérisé par une seconde plaque de montage fixée de façon amovible à la première plaque de montage citée pour la fixation d'éléments de noyau tubulaire (14) de dimensions différentes.

9. Appareil selon la revendication 8, caractérisé en ce que l'élément ne noyau tubulaire (14) est fixé à la seconde plaque de montage au moyen d'une monture à baionnette.

10. Appareil selon l'une quelconque des revendications 1 à 9, caractérisé par des moyens destinés à rassembler l'enveloppe tubulaire après qu'une quantité prédéterminée du produit pouvant couler a été déchargée du cornet de poussage (18).

11. Appareil selon l'une quelconque des revendications 4 à 10, caractérisé par une bague extérieure, filetée intérieurement, placée à proximité immédiate de l'extrémité intérieure de l'élément de noyau tubulaire (14) pour maintenir ce dernier dans une position fixe sur le cornet de poussage (18).

12. Appareil selon la revendication 11, caractérisé par des moyens destinés à régler la position fixe de l'élément de noyau tubulaire (14).

13. Appareil selon la revendication 12, caractérisé en ce que les moyens de réglage comprennent une bague de réglage filetée extérieurement, vissée à la bague extérieure et fixée de façon amovible à l'élément de noyau tubulaire (14) par des moyens coopérant avec l'extrémité intérieure de l'élément de noyau.

14. Appareil selon la revendication 13, caractérisé en ce que les moyens coopérant avec l'extrémité intérieure de l'élément de noyau tubulaire (14) comprennent des moyens d'enclenchement d'une monture à baionnette.

15. Apparail selon l'une quelconque des revendications 1 à 14, caractérisé en ce que la paroi (30) de l'élément (28) de calibrage est de forme conique.

16. Appareil selon l'une quelconque des revendications 1 à 15, caractérisé en ce que le rebord relativement étroit (32) est arrondi.

17. Article à enveloppe ayant un élément de noyau tubulaire allongé (14), un élément de calibrage (28) qui lui est fixé à une première extrémité, et une longueur continue d'une enveloppe tubulaire (12) à pré-humidification contrôlable, plissée et comprimée sensiblement sur toute la longueur dudit élément de noyau tubulaire, ledit élément de calibrage étant disposé à l'intérieur d'un tronçon non plissé de ladite enveloppe et ayant une périphérie extérieure de circonférence sensiblement fixe qui est plus grande que la circonférence intérieure de ladite enveloppe, caractérisé en ce que ledit élément de calibrage (28) comprend une paroi sensiblement inélastique (30) qui s'évase vers l'éxtérieur à partir de ladite première extrémité et qui se termine dans un rebord relativement étroit (32) qui définit ladite périphérie extérieure de circonférence sensiblement fixe et ledit rebord maintenant un contact sensiblement ininterrompu suivant un trajet circonférentiel avec la circonférence intérieure de ladite enveloppe (12), de manière que ladite enveloppe soit étirée vers l'extérieur lorsqu'elle est étirée autour dudit rebord et par-dessus celui-ci, ledit contact produisant une aire de surface de contact avec l'enveloppe qui engendre une force minimale de retenue sur ladite enveloppe afin que ladite enveloppe puisse éntre tirée aisément autour dudit rebord et par-dessus celui-ci lorsqu'aucune autre force de retenue n'est appliquée à ladite enveloppe.

18. Article à enveloppe selon la revendication 17, caractérisé en ce que ledit moyen de calibrage (28) est réalisé d'une seule pièce avec l'élément de noyau tubulaire (14).

19. Article à enveloppe selon la revendication 17 ou 18, caractérisé en ce que ledit élément de noyau tubulaire (14) comporte, á sa seconde extrémité, des moyens destinés au montage de l'article à enveloppe en position fixe sur un cornet (14) de poussage.

20. Article à enveloppe selon l'une quelconque des revendications 17 à 19, caractérisé en ce que ladite enveloppe tubulaire (12) est une enveloppe cellulosique.

21. Article à enveloppe selon l'une quelconque des revendications 17 à 20, caractérisé en ce que ladite enveloppe tubulaire (12) présente une teneur en humidité dans la plage d'environ 15,5 % à environ 35 % du poids total de l'enveloppe.

22. Article à enveloppe selon l'une quelconque des revendications 17 à 21, caractérisé en ce que ledit élément de calibrage (28) est de forme conique.

23. Article à enveloppe selon l'une quelconque des revendications 17 à 22, caractérisé en ce que le rebord relativement étroit (32) est arrondi.

# FIG. I

# FIG. 2

F I G. 3